**Europäisches Patentamt**

**European Patent Office**

**Office européen des brevets**

(11) Publication number: **0 113 220**
**B1**

(12) **EUROPEAN PATENT SPECIFICATION**

(45) Date of publication of patent specification: **14.03.90**  (51) Int. Cl.⁵: **G 01 V 1/24**

(21) Application number: **83307651.6**

(22) Date of filing: **15.12.83**

(54) **Method and apparatus for controlling cableless seismic digital field recorders having seismic data processing capabilities.**

<table>
<tr><td>

(30) Priority: **29.12.82 US 454402**

(43) Date of publication of application:
**11.07.84 Bulletin 84/28**

(45) Publication of the grant of the patent:
**14.03.90 Bulletin 90/11**

(84) Designated Contracting States:
**AT BE CH DE FR GB IT LI LU NL SE**

(56) References cited:
**US-A-3 288 242**
**US-A-3 806 864**
**US-A-3 946 357**
**US-A-3 987 406**
**US-A-4 017 833**

</td><td>

(73) Proprietor: **AMOCO CORPORATION**
**200 East Randolph Drive**
**Chicago Illinois 60601 (US)**

(72) Inventor: **Bogey, Terry Lewis**
**5357 East 26th Place**
**Tulsa Oklahoma 74114 (US)**
Inventor: **Bemore, Leroy, Jr.**
**4603 North Garrison Place**
**Tulsa Oklahoma 74126 (US)**
Inventor: **Warmack, Ralph Ernest**
**4319 Cedar Valley Drive**
**Kingwood Texas 77345 (US)**

(74) Representative: **Garratt, Peter Douglas et al**
**Mathys & Squire 10 Fleet Street**
**London EC4Y 1AY (GB)**

</td></tr>
</table>

Courier Press, Leamington Spa, England.

## Description

This invention relates to geophysical exploration for petroleum and minerals. More particularly, this invention is directed to geophysical prospecting by means of the seismic technique.

Seismic prospecting involves generating seismic waves at the surface of the earth by means of a seismic source. The seismic waves travel downward into the earth and are reflected and/or refracted due to differences in acoustic impedance at the interfaces of various subsurface geological formations. Detectors, called seismometers, or geophones, located along the surface of the earth and/or in a borehole produce analog electrical seismic-trace signals in response to detected seismic wave reflections and/or refractions. The analog electrical seismic-trace signals from the seismometers, or geophones, can then be recorded. Alternatively, the analog electrical seismic-trace signals from the seismometers, or geophones, can be sampled and digitized prior to being recorded. The seismic-trace data recorded in either manner is subsequently processed and analyzed for determining the nature and structure of the subsurface formations. Specifically, this invention is directed to the control of a cableless seismic digital recording field system used for acquiring and processing seismic-trace data, irrespective of the type of seismic source used for imparting seismic energy to the earth.

Various forms of cableless seismic digital recording systems are known. The cableless seismic digital recording system is a field system developed for seismic prospecting for digitally recording seismic-trace signals produced by seismometers, or geophones, without the need for multi-conductor cables or alternate means such as multi-channel radio telemetry for transmitting seismic-trace data to a central recording point. In particular, the cableless seismic digital recording system includes recorders placed near the seismometer, or geophone, locations and arranged for producing individual recordings in response to control signals transmitted from a control point over a communications link, preferably a radio communications link. This invention is directed to the control of the recorders whose operation includes acquisition and processing of seismic-trace data generated by low energy surface seismic sources, such as vibrators, as well as high energy impulsive seismic sources, such as dynamite.

Consider Broding et al. U.S. Patent 3,806,864, hereby incorporated by reference into this specification to form a part thereof, which discloses a cableless seismic digital recording system in which each seismic trace is digitally recorded by a small, portable recorder located near an associated seismometer, or geophone. A large number of such seismometers, or geophones, and corresponding recorders are remotely deployed in a prospect area, and only those recorders needed for producing a given set of recordings are selectively activated at any time from a control point by transmitting a set of coded signals over a communication link, preferably a radio communications link. A standard geophysical channel FM radio system is preferably employed in which the coded signals are transmitted as digital bits, that is, logical ones and zeros, at different audio frequencies. Only the activated recorders are caused to record the seismic-trace data. The remaining recorders remain essentially quiescent until there is a desired to produce a set of recordings for the prospect areas where they are situated. As disclosed in Broding et al. U.S. Patent 3,806,864, the seismic-trace data is preferably recorded on a magnetic tape cartridge. Identifying and operating information, partly transmitted from the control point and partly entered into each of the recorders at the time of deployment, is also preferably recorded on the magnetic tape cartridge immediately preceding the timed sequence of seismic-trace data. Each recorder is de-activated after the recording process is completed.

Now, many techniques for generating and recording seismic waves are currently in use. Exploding-gas and compressed-air guns and dynamite are examples of high energy seismic sources which generate a sharp pulse (impulse) of seismic energy. Vibrators, which generate a "chirp" signal of seismic energy, and hammers are examples of low energy surface seismic sources. In the case of vibrators, the recorded seismic wave reflections and/or refractions are cross-correlated with a replica (called the "pilot signal") of the original "chirp" signal in order to produce seismic-trace recordings similar to those which would have produced with a high energy impulse seismic source. This process is known as "vibroseis".

Considered in more detail, vibroseis seismic prospecting, commercialized by Continental Oil Company, typically employs a large, vehicle-mounted vibrator as a seismic source. The vehicle is deployed to a prospect area, and the vibrator is positioned in contact with the surface of the earth. Thereafter, the vibrator is activated for imparting vibrations to the earth, thereby causing seismic waves to propagate through the subsurface formations. The seismic wave reflections and/or refractions are detected by seismometers, or geophones, deployed in the prospect area.

Advantageously, the use of a vibrator can be more economical than the use of dynamite. Furthermore, as compared to the use of a high energy impulsive seismic source, such as dynamite, the frequency of the seismic waves generated by a vibrator can be selected by controlling the frequency of the pilot signal to the power source, such as a hydraulic motor, which drives the vibrator. More particularly, the frequency of the pilot signal to the vibrator power source can be varied, that is, "swept", for obtaining seismic-trace data at different frequencies. Consider, for example, Doty et al. U.S. Patent 2,688,124 which discloses how a low energy seismic wave, such as generated by a vibrator, can be used effectively for seismic prospecting if the frequency of the vibrator "chirp" signal which generates the seismic wave is swept according to a known pilot signal and the detected seismic wave reflections and/or refractions are cross-correlated with the pilot signal in order to produce seismic-trace recordings similar to those which would have been produced with a high energy impulsive seismic source. Typically, the pilot signal is a swept frequency sine wave which causes the vibrator power source to drive the vibrator for coupling a swept sine wave "chirp" signal into the earth. A typical swept frequency operation can employ, for example, a 10- to 20-second long sine wave "chirp" signal with a frequency sweep of 14 to 56 Hz. The swept frequency operation yields seismic-trace data which enables the different earth responses to be analyzed, thereby providing a basis on which to define the structure, such as the depth and thickness, of the subsurface formations.

Unfortunately, recorded seismic-trace data always includes some background (ambient) noise in addition to the detected seismic waves reflected and/or refracted from the subsurface formations (referred to as "seismic signal"). Ambient noise is not repeatable with or dependent on the seismic source. The ambient noise appears in many forms, such as atmospheric electromagnetic disturbances, wind, motor vehicle traffic in the vicinity of the prospect area, recorder electrical noise, etc.

When a high energy impulsive seismic source is used, such as dynamite, the level of the detected seismic signal is usually greater than the ambient noise. Use of the cableless seismic digital recording system disclosed in Broding et al. U.S. Patent 3,806,864 is most advantageous in instances when seismic-trace data is generated by a high energy impulsive seismic source. This is because the data storage capacity of commercially available magnetic tape cartridges is adequate for recording the seismic-trace data.

However, when a low energy surface seismic source is used, such as a vibrator used in vibroseis seismic prospecting, the ambient noise can be at a level greater than the seismic signal. For that reason, seismic-trace records are often produced involving the repeated initiation of the low energy surface seismic source at about the same origination point, thereby producing a sequence of seismic-trace data based on seismic wave reflections and/or refractions that have travelled over essentially the same path and therefore have approximately the same travel times. Because the data storage capacity of commercially available magnetic tape cartridges such as used in the cableless seismic digital recording system disclosed in Broding et al. U.S. Patent 3,806,864 is limited, the capacity is not always adequate for recording every repetition individually as well as accommodating the increase in record length required when a low energy surface seismic source is used.

Weinstein et al. U.S. Patent 3,946,357 and Broding U.S. Patent 4,017,833, hereby incorporated by reference into this specification to form a part thereof, disclose that seismic-trace data generated by low energy surface seismic sources can be vertically stacked (summed, or composited) prior to recording in order to economize tape usage, thereby overcoming the limitation of the data storage capacity of commercially available magnetic tape cartridges such as used in the cableless seismic digital recording system disclosed in Broding et al. U.S. Patent 3,806,864. Weinstein et al. U.S. Patent 3,946,357 and Broding et al. U.S. Patent 4,017,833 disclose recorders which sum newly acquired seismic-trace data generated by a low energy surface seismic source with previously accumulated seismic-trace data temporarily stored between consecutive initiations of the seismic source. The accumulated sum is later recorded on a magnetic tape cartridge. The copending Read et al. European patent application EP—A—115146 of the same Applicants, filed on the same date as this application, discloses a recorder which can process seismic-trace data acquired during seismic prospecting with a low energy surface seismic source for further improving the signal-to-noise ratio. The signal-to-noise improvement of the seismic-trace data results from weighting the seismic-trace data prior to being vertically stacked. The weighting applied is preferably selectable from the control point.

The recorders of such cableless seismic digital recording systems selected for producing a given set of recordings must be precisely controlled so that they activate properly. Proper activation is highly desirable for conserving power, typically supplied by batteries, in order to prolong operation of the recorders. Also, operation of the recorders activated for producing a given set of recordings must be properly synchronized. Proper synchronization is needed for preserving the relationship among the activated recorders, for example, the spatial relationship which can cause different travel times for seismic waves between the seismic source and the seismometers, or geophones, associated with the recorders due to different distances between the seismic source and the seismometers, or geophones. Furthermore, identifying and operating information needed in the acquisition and recording of seismic-trace data must be accurately communicated to the activated recorders. In instances where various selectable modes of operation of the recorder are available, as in the case of the recorder disclosed in the aforementioned copending Read et al. application, the selected mode must be precisely communicated to the activated recorders for proper operation. Additionally, in instances where the recorders acquire, process, and record seismic-trace data during seismic prospecting with a low energy surface seismic source, operation of the activated recorders must be coordinated with the initiations of the seismic source. This invention is directed to the control of recorders for effective operation of the cableless seismic digital recording system so that needed control signals are accurately communicated to the recorders selected to be activated and so that errors in the operation of the recorders are avoided, especially when repeated initiations of a low energy surface seismic source are involved.

According to the invention there is provided an apparatus for controlling cableless seismic digital recorders, each being connectable to at least one associated seismic wave detector for use in seismic prospecting, and operative for weighting and vertically stacking seismic-trace data from the at least one seismic wave detector, comprising means for entering information for selecting which of said recorders is to be activated during a seismic prospecting operation; means for entering operating information for selecting from a plurality of operational modes of each recorder; means for encoding said information as coded signals for transmission to said recorders; and means for transmitting said coded signals to said recorders, characterised in that said means for entering operating information comprises means for selecting an operational mode for weighting and vertically stacking seismic-trace data in the recorder.

According to the invention there is also provided a method for controlling cableless seismic digital recorders, each being connectable to at least one associated seismic wave detector for use in seismic prospecting, and operative for weighting and vertically stacking seismic-trace data from the at least one seismic wave detector, comprising the steps of entering information for selecting which of the recorders is to be activated during seismic prospecting and operating information, characterised by including in the operating information, information for weighting and vertically stacking seismic trace data; encoding the information and operating information as coded signals for transmission to the recorder; and transmitting the coded signals to the recorders.

A method and apparatus according to the invention may be suitable for controlling recorders of a cableless seismic digital recording system of the type disclosed in Broding et al, U.S. patent 3,806,864 for facilitating application of the cableless seismic digital recording system to seismic prospecting with any type of seismic source, either a high energy impulsive seismic source, such as dynamite, or a low energy surface seismic source, such as a vibrator used in vibroseis seismic prospecting. Automated techniques are utilized for reducing errors in repetitive operations during seismic prospecting with a low energy surface seismic source when activating the selected recorders and transmitting identifying and operating information for producing each seismic-trace record.

The preferred embodiment of the control means of the invention includes means, preferably a control panel, for entering control signals representative of the recorders selected to be activated, as well as identifying and operating information to be transmitted to the activated recorders. The control means further includes means, preferably a format circuit, responsive to the control signals for encoding the control signals as coded signals. The coded signals include record-header block identification data, such as crew identification, date, and other identifying information, and recording-parameter data, such as operational mode, exponent for calculating a weighting value in order to improve the signal-to-noise ratio of seismic-trace data in the operational mode using a low energy surface seismic source, whether or not the seismic-trace data is to be normalized prior to recording, and other operating information. The control means additionally includes means for transmitting the coded signals, preferably as coded radio signals transmitted over a radio communications link, to the activated recorders for operation in one of several operational modes.

The control means of the invention preferably utilizes coherent frequency-shift keying in which several different audio frequencies, bearing certain relations to each other, are employed. This results in near optimum communications for controlling the recorders over a voice-grade, standard geophysical licensed radio communications link. The control means preferably includes countdown circuits for maintaining all audio frequencies coherent, the filters included in the receiver circuits of the recorders being sampled ("strobed") from the carrier frequency reference.

Only the recorders needed for producing a given multiple seismic-trace record are activated by the control means. Various kinds of identifying and operating information concerning the next recording to be produced, as well as a zero-time mark so that digital sampling of the seismic-trace data to be recorded can be synchronized, needed for obtaining useful seismic-trace data, are transmitted to the activated recorders by the control means. The operating information transmitted by the control means causes the recorders to be placed in various operational modes, including shooter's box routines, dynamite (non-stacking) data processing, and stacking data processing.

Recorders which are designated as "shooter's boxes" can be used for initiating the seismic source, such as dynamite, a vibrator, or any other type of seismic source. Initiation of the seismic source is determined by a variable advance preferably entered into the recorder at the time of deployment which establishes the lead time for initiation of the seismic source before recording by the activated recorders commences. When used for initiating a high energy impulse seismic source, the "shooter's box" can be used to record the source characteristic. The "shooter's box" also calculates and records "uphole" time, that is, the time delay between source initiation and detection of the direct seismic wave. When used for initiating a low energy surface seismic source, the "shooter's box" can be used to record the source characteristic, and in the case of vibroseis seismic prospecting records either the first or last pilot signal in a sequence of vibrator sweeps.

Dynamite (non-stacking) data processing is a relatively slow operation usually requiring several minutes or more between high energy impulsive seismic source initiations. Preferably, seismic-trace data is normalized before being recorded. The recorders in the dynamite (non-stacking) data processing mode de-activate after the recording process is completed.

Stacking data processing requires only a few seconds between low energy surface seismic source initiations, and the recorders therefore remain activated for retaining weighted and vertically stacked seismic-trace data in random access memory. Preferably, weighted and vertically stacked seismic-trace data is normalized before being recorded. Recording is either after processing the final initiation in the current sequence or during acquisition of the initial initiation in the subsequent sequence. A timer included in each of the recorders will de-activate the recorder after a predetermined period of time during seismic prospecting with a low energy surface seismic source, if no coded radio signal is transmitted by the control means within that period.

The operational modes are selected by the coded radio signals transmitted by the control means of the invention which automatically controls the format circuit for re-transmitting identifying and operating information. Operating information, such as "record at end of current trace", "record at start of next trace", etc., can be modified during seismic prospecting with a low energy surface seismic source. The control means also controls the time between consecutive initiations of the low energy surface seismic source.

The control means of the preferred embodiment while still employing the licensed geophysical audio frequency band, utilizes coherent frequency-shift keying, which improves the detection threshold of signal to noise, and automated techniques for transmission of identifying and operating information, and, consequently, the probability for error is reduced. Therefore, the desired control over the recorders is obtained.

The above and other features of this invention and a better understanding of the principles and details of the invention will be evident to those skilled in the art in view of the following description of the preferred embodiments given in conjunction with the accompanying drawings, in which:

Figure 1 is a diagrammatic cross-section of the earth which shows a field surveying operation using a cableless seismic digital recording system in accordance with the invention;

Figure 2 shows a deployment of the preferred embodiment of the control means of the cableless seismic digital recording system shown in Figure 1;

Figure 3 is a block diagram of a preferred embodiment of the electronic circuitry which comprises the control means of the invention;

Figure 4 shows the control panel of a preferred embodiment of the control means of the invention; and

Figure 5, comprising Figures 5A and 5B, is a time diagram of the coded signal transmissions by a preferred embodiment of the control means of the invention.

In using the preferred embodiment of the invention, each of a plurality of small, portable recorders is placed near and connected to a seismometer, for example, in a prospect area for recording one trace of a multiple seismic-trace record. Each recorder is preset to be responsive to and activated by coded signals transmitted over a communications link, preferably a radio communications link, from a control point to all of the recorders. Initially, in producing a seismic-trace record, the coded signals transmitted to all recorders contain coded signals corresponding to the preset indicia of only the recorders desired to be activated. Also, record-header block identification data and recording-parameter data are transmitted from the control point for operation of the activated recorders and to be recorded digitally on the magnetic tape cartridges of the activated recorders, together with additional identifying and operating information peculiar to and entered into each recorder. Immediately following is transmitted a zero-time mark. The identifying and operating information and zero-time mark are recorded with the timed sequence of digitized seismic-trace data associated with the corresponding seismometer. At the end of the recording process, the activated recorders automatically de-activate, reset themselves, and assume radio standby status in readiness for the next activation and digital recording sequence. Those recorders of the larger array which do not receive the particular coded signals necessary for them to be activated remain in an intermediate standby status without any movement of the recording tape.

As the recorders are utilized only as needed, each of the recorders normally has sufficient recording capacity for all of the seismic-trace records that are to be produced at a given location. When the location of the seismometer and associated recorder is to be changed, the recorded tape can be removed, and a fresh supply of blank recording tape inserted.

The recorded tapes can then be transported to a central location for playback and storage of the seismic-trace data in any desired form and format of digital-computer storage and work tape. After the transcription has been performed, the field tape can be erased and returned to the prospect area for further use.

The preferred embodiment of the invention is a control means for controlling seismic prospecting utilizing the recorders. A preferred recorder is more fully described in the aforementioned copending Read et al. application.

Primarily, the function of the preferred embodiment is initially to transmit coded signals to activate the selected recorders. Then the control means transmits record-header block identification data and recording-parameter data. Finally, the control means transmits a zero-time mark coincident with the initiation of seismic wave generation. For these purposes, the control means includes circuitry by means of which apropriate control signals can be selected and transmitted as coded signals to the recorders. The transmission can be over an ordinary one-way radio communications link. As the transmitted coded signals occupy only a relatively limited frequency range, a high-quality, expensive transmission system is unnecessary.

Data acquisition by each recorder is initiated by the coded signals transmitted over the one-way radio communications link with a single transmitter associated with the control means at the control point, or base station. An almost unlimited number of recorders can be deployed simultaneously at any location in the prospect area within the range of the transmitter, the range being about an eight-mile radius of the control point in the preferred embodiment.

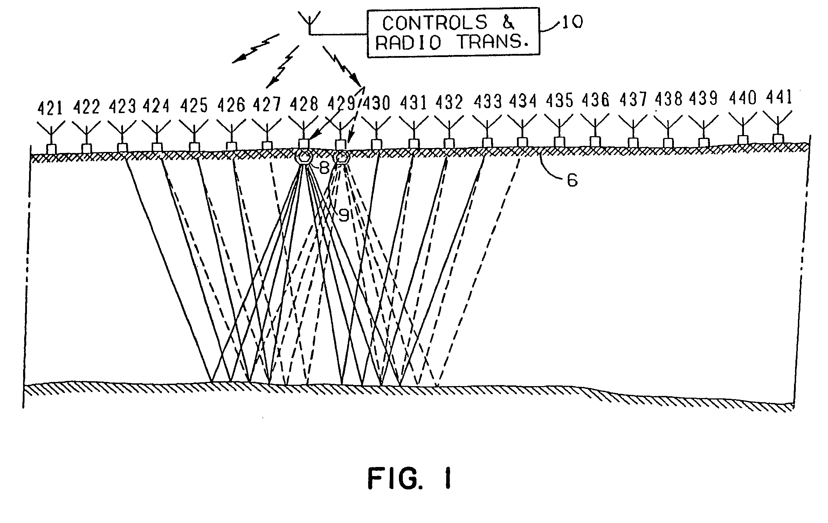

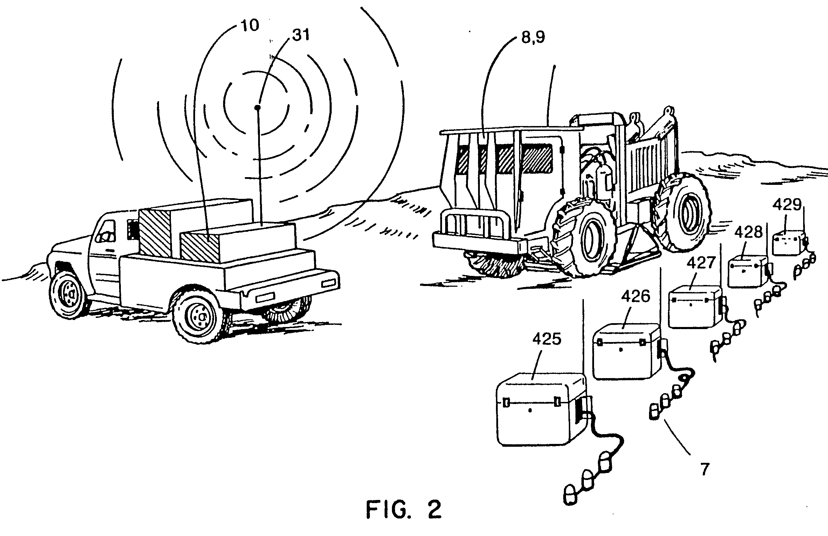

With reference now to the drawings, Figure 1 shows in diagrammatic fashion an earth cross-section with a cableless seismic digital recording system in accordance with the invention positioned for recording seismic-trace data. Spaced at intervals along a profile survey line extending along the earth's surface 6 are individual recorders 421—441, each comprising a radio receiver circuit, including an antenna, and a small magnetic tape device, preferably of the cartridge type. Each of the recorders 421—441 is connected to at least one seismometer and preferably to a group of interconnected seismometers 7 producing a single seismic-trace signal in the manner customary in seismic prospecting as shown in Figure 2. At or near the positions occupied by the recorders 428 and 429 in Figure 1 are respectively shown diagrammatically a first seismic source 8 and a second seismic source 9. At any convenient control point, there is a control means, generally indicated by the numeral 10, including control circuits and a radio transmitter, which controls and coordinates the operation of the recorders 421—441. The various seismometers or seismometer groups 7 are initially deployed along the profile survey line, and each seismometer or seismometer group is then electrically connected to the amplifier input terminal of the associated one of the recorders 421—441 as more clearly shown in Figure 2.

For the purposes of illustration, the reference numbers 421—441 can be considered to function also as identification numbers for the locations of the seismometers or seismometer groups 7. As each seismometer or seismometer group 7 and associated one of the recorders 421—441 is placed at a location, that location number, or address, is entered into the recorder to become both the coded signal which will subsequently activate the recorder, as well as the recorder position identification to be supplied by the recorder and recorded as part of the record-header block identification data. For example, when the recorder 425 and corresponding seismometer or seismometer group 7 are placed in position and connected together, the numerals "4", "2", and "5" are manually set on call-code dials, such as three digital pushbutton switches, included in the recorder. The binary coded decimal (BCD) equivalent of 425, namely, 0100 0010 0101, becomes the coded address signal that is to be transmitted by the control means 10 whenever the recorder 425 is to be activated for recording seismic-trace data.

Specifically, in preparing to record from source point 8 in Figure 1, for example, the control means 10 transmits, over the radio communications link to all of the recorders 421—441, coded address signals so chosen that only the recorders 423—426 and 430—433, for example, are activated for recording, the remainder of the recorders remaining quiescent. The coded signals also include record-header block identification data identifying location 428 as the source point, for example, as well as providing other identifying information, such as crew identification, date, time and the like. Included in the transmission by the control means 10 is also recording-parameter data indicating the operational mode, for example, as well as providing other operating information. The transmitted data is to be recorded by all of the eight operating recorders 423—426 and 430—433 together with additional identifying and operating information entered into each recorder. Furthermore, the coded signals include a zero-time mark indicating the initiation of generation of seismic waves by the seismic source 8. During the transmission, all of the recorders 423—426 and 430—433 synchronize to the zero-time mark. Therefore, sampling of the seismic-trace signals detected by the seismometers or seismometer groups 7 in Figure 2 connected to the operating recorders is in synchronization. At the end of a preset recording interval, the recorders 423—426 and 430—433 return to a standby status in readiness for the next recording.

For recording from source point 9, the eight selected recorders to be activated are shifted one profile position to the right in Figure 1 from those used for recording from source point 8. The control means 10 accordingly transmits modified coded address signals to which only the recorders 424—427 and 431—434 respond by activating. The control means 10 also transmits appropriate modified record-header block identification data and recording-parameter data, immediately followed by a zero-time mark indicating the initiation of generation of seismic waves by the seismic source 9. The recorders 424—427 and 431—434 also return to standby status at the end of the recording period.

In the above manner, seismic waves are successively generated at locations 430, 431, 432, and so on, until all desired generation and recording points along the profile survey line have been occupied. The showing of only eight recorders in operation is to simplify the example and avoid confusion in the drawings. In commercial embodiments, the number of active recorders for each seismic-trace record is typically 96, 144, or more, with seismometer or seismometer group and associated recorder spacings subject to exploration conditions. Nevertheless, the principle of operation is the same as described above.

The controlling element in the cableless seismic digital recording means is the control means 10. The control means 10 activates and selects the operational mode of the remotely deployed recorders 421—441, control the initiation of the seismic source which generates the seismic-trace data acquired by the activated recorders, and is the source of system timing and synchronization.

Functions performed by the control means 10 include activating a radio transmitter, transmitting a squelch tone which informs the radio receiver circuit of each of the recorders 421—441 that seismic prospecting is about to commence converting identifying and operating information entered into the control means by means of a control panel to coded signals in the form of modulation tones and transmitting the coded signals, and displaying and printing the information entered via the control panel. The control means 10 preferably employs coherent frequency-shift keying, in which several different audio frequencies, bearing certain relations to each other, are utilized, so that maximum range is assured for accurately activating the selected recorders and transmitting necessary identifying and operating information for producing each seismic-trace record.

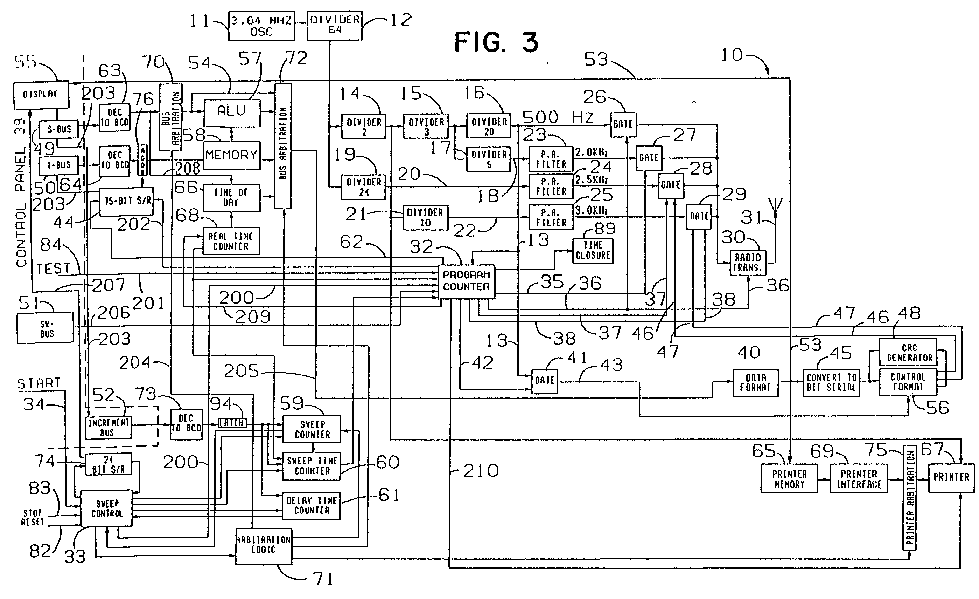

Figure 3 is a diagrammatic representation of the control means 10 employed at the control point to place coded radio signals onto a licensed geophysical radio frequency band for controlling the recorders 421—441 in Figure 1. As shown in Figure 3, the control means 10 preferably comprises countdown circuits which adjust the phases of the audio-frequency signals for producing coherent frequency blocks, as well as stroboscopically actuate integrate and dump filters included in the recorders 421—441 in Figure 1 by means of a carrier frequency reference during transmission by the control means. Coherent frequency-shift keying provides excellent digital control of the recorders 421—441 through employment of the licensed geophysical radio frequency band with its maximum audio frequency of 3 kilohertz (kHz) through communication with the recorders on multiple frequencies which are integral multiples of a standard frequency.

500 hertz, for example, can be selected as the standard frequency, which permits six audio-frequency channels. There is a minimum of two audio frequencies among these specifically chosen for digital encoding, one frequency, such as 3 kHz, being used with the 500-hertz signal for a logical one, and another of the selected frequencies, such as 2.5 kHz, being used with the 500-hertz signal for a logical zero. The base frequency (500 hertz) can also be used with a frequency such as 2 kHz for further control functions. Each audio-frequency signal transmitted by the control means 10 is a rectangular, essentially constant amplitude block of a sine wave form, there being an integral number of cycles in the block.

As shown in Figure 3, the audio-signaling frequencies employed, namely 500 hertz, 2 kHz, 2.5 kHz, and 3 kHz, are all derived from a clock oscillator 11. The clock oscillator 11 is preferably a Colpitts oscillator. A transistor included in the circuit of the clock oscillator 11 provides a buffered, CMOS-compatible output with an amplitude of approximately 8.5 V peak-to-peak. The frequency of the clock oscillator 11 in the preferred embodiment is 3.84 megahertz (MHz).

The 3.84-MHz signal from the clock oscillator 11 is passed through frequency dividers for obtaining integrally related audio-signaling frequencies. First is a frequency divider 12 for producing an output frequency of 60 kHz, following which a multiplicity of frequency dividers is employed depending upon the ultimate audio-signaling frequencies desired. These frequencies are related by integral multiples. Thus, for example, the signal from the frequency divider 12, which ultimately appears as a 500-hertz signal on a line 13, achieves that status by being passed through a frequency divider of two at 14, one of three at 15, and one of twenty at 16. The same chain, except for the last frequency divider, employing instead a divider of five at 17, leads to a line 18, where the frequency is a precise 2 kHz. Similarly, including after the frequency divider 12 a divider of twenty-four at 19 produces a frequency of 2.5 kHz on a line 20 precisely related to the above two frequencies. Finally, including after the frequency divider 14 at frequency divider 21, which divides by a factor of ten, produces on a line 22 a frequency of precisely 3 kHz. The purpose of these circuits is to produce four audio-signaling frequencies. One requirement for a coherent frequency-shift keying integrate and dump radio system has been met since the frequency relationships of all audio-signaling frequencies are integrally related, one being 500 hertz, another being four times this, a second five times this, and a third six times this value. Also, the 30-kHz signal from the frequency divider 14 is used as a clock for printer circuitry as will be described later.

In order to achieve maximum signal-to-noise ratio, the upper three frequencies are filtered by phase-adjustable filters 23, 24, and 25 as shown in Figure 3. The audio-frequency signals used in the digital signaling blocks transmitted to the recorders 421—441 in Figure 1 must also be phase adjusted to be coherent in each bit. Consequently, each of the filters 23, 24, and 25 in Figure 3 contains phase-shifting networks capable of adjusting the phase of the filtered audio-frequency signal passing through. As shown in Figure 3, there are four gates 26, 27, 28, and 29, which are extremely high speed electronically controlled switches that do not affect phase. In order to adjust the phase of the filters 23, 24, and 25 during the construction of the control means 10, a record is made of the 500-hertz signal passing through the gate 26 for an integral number of cycles, in this particular case one cycle of two-millisecond duration. A similar record is made for an identical gating of the 2-kHz, 2.5-kHz, and 3-kHz signals, and the phases of the four are compared. By that is meant that the records are compared for determining whether or not, when the gate 26 is turned on for the 500-hertz signal and the signal starts to increase from zero, at that same instant, the gate 27 passes a signal of 2 kHz starting from zero amplitude and increasing sinusoidally in the same polarity as the 500-hertz signal from the gate 26. The same is checked with regard to the gate 28 for the 2.5-kHz and the gate 29 for the 3-kHz signals. The phase-shifting networks of the respective filters 23, 24, and 25 can be varied until all of the signals are coherent as they are passed to an FM radio transmitter 30 which receives all of the signals from the gates 26, 27, 28, and 29. These signals frequency-modulate the radio transmitter 30 with its antenna 31 which is employed for the radio communications link to the recorders 421—441 in Figure 1.

The radio transmitter 30 in Figure 3 is preferably a commercially available FM radio transmitter operating, for example, in the VHF "high" band at a frequency of 153—159 MHz with approximately 50 W of radio-frequency output power. The control means 10 is wired-in past the audio filters of the radio transmitter 30 for assuring that all of the audio-signaling frequencies are transmitted without distortion. One of the advantages of the control means 10 is that the frequency used can be the same as that used for voice communications between the observer and the field crews which deploy the recorders 421—441 in Figure 1. Therefore, if the field crews cannot hear the audio-signaling frequencies over their portable radio transceivers, they know instantly that there is a malfunction of the control means 10.

Typically, the radio transmitter 30 in Figure 3 is installed in the observer's vehicle as shown in Figure 2. The antenna 31 is preferably a vertical 5/8-wavelength whip mounted to the observer's vehicle.

As shown in Figure 3, the control means 10 also includes a program counter 32. The program counter 32 produces signals at very carefully counted times for turning on the various gates 26, 27, 28, and 29 for transmitting the desired audio-signaling frequencies to the recorders 421—441 in Figure 1. The 500-hertz signal on the line 13 in Figure 3 is used as a clock for the program counter 32.

Briefly, when the program counter 32 is activated by a "start" signal on a line 200 from a sweep control circuit 33 in response to actuation of a start push-button switch 34, the program counter produces a signal on a line 36 which activates the radio transmitter 30. A "test" signal is produced when a test pushbutton switch 84 is depressed. A test signal on a line 201 activates the program counter 32 in response to actuation of the test pushbutton switch 84 so that the program counter produces a signal on the line 36 which activates the radio transmitter 30. Simultaneously, through the line 36, the program counter 32 turns on the gate 26. This places the 500-hertz carrier signal on the antenna 31. The program counter 32 then proceeds to cause the 500-hertz signal to be modulated until the end of transmission and the "carrier off" signal as will be described in more detail later. The 2-kHz signal modulates the radio transmitter 30 through the gate 27 which is turned on by a signal from the program counter 32 on a line 35. The 2.5-kHz signal modulates the radio transmitter 30 through the gate 28 which is turned on by a signal from the program counter 32 on a line 37. The 3-kHz signal also modulates the radio transmitter 30 through the gate 29 which is turned on by a signal from the program counter 32 on a line 38.

The phase control logic generated by the program counter 32 controls operation of the control means 10. The program counter 32 comprises several NAND gates and a phase counter. The program counter 32 also includes a transmit flip-flop which produces a "transmit" signal on the line 36 for activating the radio transmitter 30 during transmission of the addresses and identifying and operating information.

The sweep control circuit 33 includes a series of J—K flip-flops which produce a start signal in response to an external start or upon actuation of the start pushbutton switch 34. The start signal synchronizes all word counters.

A shift register 44 addresses the switches of a control panel 39 when a "scan" signal produced by the program counter 32 appears on a line 202. The phase control logic generated by the program counter 32 produces a single-bit logical zero that is applied to the shift register 44 on a line 62. Since the shift register 44 contains all logical ones, the logical zero is shifted down, and the corresponding address is decoded on each of the buses of the control panel 39. A "scan complete" signal is produced at the end of this process on the line 202.

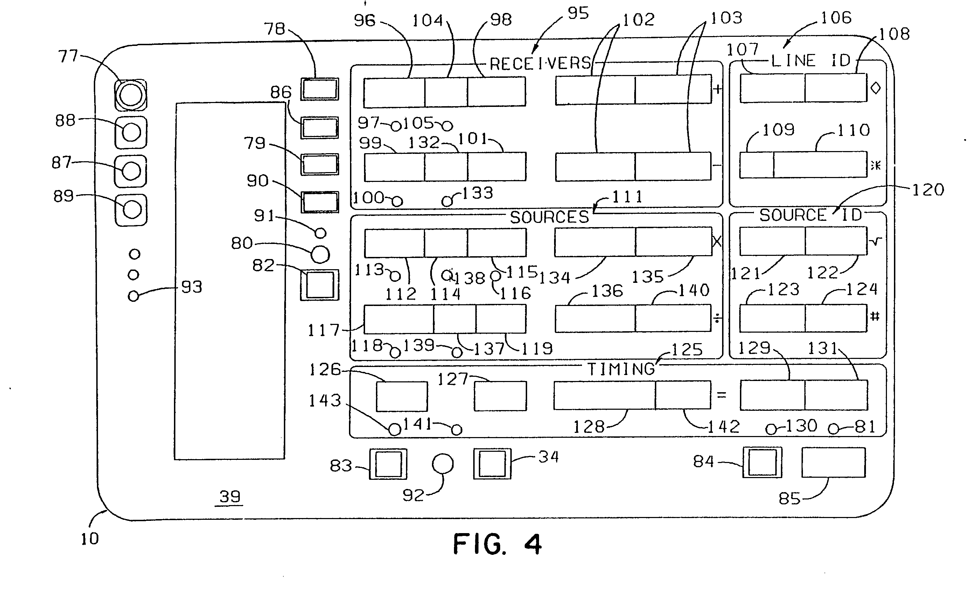

As shown in Figure 3, the control means 10 further includes the control panel 39 for selecting and initiating transmission of identifying and operating information to the recorders 421—441 in Figure 1. The control panel 39 includes various thumbwheel switches, displays, illuminated pushbuttons, external connectors, a printer, and phase switches as shown in more detail in Figure 4.

With reference to Figure 4, a power/radio receptacle 77 is provided for a 12 VDC power source (normally the observer's vehicle battery) and also furnishes the audio-signaling frequencies for keying the radio transmitter 30 in Figure 3. As shown in Figure 4, a power pushbutton switch 78 turns on power to the control means 10. The power pushbutton switch 78 illuminates when the control means 10 is turned on. If the current supplied by the battery falls below approximately 2.5 A, the control means 10 will not transmit or illuminate the displays of the control panel 39. If operation under low power conditions is necessary, the displays can be deactivated by means of a display off pushbutton switch 79. The display off pushbutton switch 79 turns off all displays of the control panel 39 in order to conserve power but leaves the remainder of the control means 10 powered up. The display off pushbutton switch 79 illuminates when the displays of the control panel 39 are turned off. The control means 10 will not operate with an input voltage of less than 10.5 VDC. The voltage is indicated by a battery monitor 80 on the control panel 39.

A set enable pushbutton switch 81 must be depressed whenever any of the set pushbutton switches or a master reset pushbutton switch 82 is depressed. As will be described in more detail later, the set enable pushbutton switch 81 enables information to be entered by means of the thumbwheel switches of the control panel 39 and sets the automatic functions of the control means 10.

As will be described in more detail later, the start pushbutton switch 34 initiates transmission of the addresses and identifying and operating information. The start pushbutton switch 34 is illuminated continuously during transmission of the addresses and identifying and operating information and flashing during wait periods between transmissions. A stop pushbutton switch 83 terminates operation of the control means 10. The stop pushbutton switch 82 is illuminated continuously during periods when there are no transmissions and flashing during wait periods while a current transmission is being completed. The master reset pushbutton switch 82 initiates transmission of a shutdown command to the recorders 421—441 in Figure 1, halts the current operation of the control means 10, prints the information entered into the control means, and places the control means in an idle state. The test pushbutton switch 84 in Figure 4 causes transmission of the 500-hertz carrier signal. The test pushbutton switch 84 illuminates when depressed. A test address switch bank 85 is a four-digit thumbwheel switch manipulated for entering an address for a test operation.

An external start pushbutton switch 86 allows the control means 10 to be initiated from an external source. The external start pushbutton switch 86 illuminates when depressed. An external start jack 87 allows the control means 10 to be connected to the external source. A time zero jack 88 activates when transmission of the addresses and identifying and operating information is initiated. A time closure jack 89 allows external equipment to be activated by the control means 10 at a designated time. A time closure switch bank 131 is a four-digit thumbwheel switch manipulated for entering up to a 10-second delay for timed activation of external equipment.

As will be described in more detail later, a printer prints identifying and operating information on paper tape during the last transmission for a seismic source point or during master reset. A paper advance pushbutton switch 90 initiates play-out of paper in the printer. The paper advance pushbutton switch 90 illuminates when depressed. A normal/paper-inh/cont switch 91 is a three-position toggle switch. In "Normal" it allows normal operation of the control means 10. In "Paper Inhibit" it will not allow the printer to print. In "Continuous" it allows the control means 10 to continuously transmit to allow checks and adjustments during a test operation.

A phase switch 92 provides coarse adjustments to bring the control means 10 in phase with the radio transmitter 30 in Figure 3. Fine-phase potentiometers 93 are adjusted in conjunction with the phase switch 92 in Figure 4 to bring the control means 10 in phase with the radio transmitter 30 in Figure 3.

As shown in Figure 4, the control panel 39 includes a receivers section 95. A begin (first series) switch bank 96 is a four-digit thumbwheel switch manipulated for entering a first address, or number, for a first array. A set (first series) pushbutton switch 97 when depressed causes the first begin number to be displayed and enters the first begin number into the control means 10. A number of stations (first series) switch bank 98 is a four-digit thumbwheel switch for the first array which indicates the number of recorders 421—441 in Figure 1 to be activated in the first array. A begin (second series) switch bank 99 is the same as the begin (first series) switch bank 96 except applies to a second array. A set (second series) pushbutton switch 100 is the same as the set (first series) pushbutton switch 97 except applies to the second array. A number of stations (second series) switch bank 101 is the same as the number of stations (first series) switch bank 98 except applies to the second array. A begin display 102 serves as a display for the first and second begin switches 96 and 99. An end display 103 serves as a display for the last station number of the first and second series. A roll (first series) switch bank 104 is a two-digit thumbwheel switch manipulated for entering a two-digit number which denotes how many numbers will be added to or subtracted from the first begin number in the first array for each successive seismic prospecting operation. A fwd/rev switch 105 is a two-position toggle switch which in "Forward" automatically increments the first begin number by the roll and in "Reverse" decrements the first begin number by the roll for the first array. A roll (second series) switch bank 132 is the same as the roll (first series) switch bank 104 except applies to the second array. A fwd/rev switch 133 is the same as the fwd/rev switch 105 except applies to the second array.

The control panel 39 also includes a line identification section 106. A line switch bank 107 is a four-digit thumbwheel switch manipulated for entering the seismic line designation. A month/day switch bank 108 is a four-digit thumbwheel switch with the first two digits manipulated for entering the month and the second two digits the day. A year switch bank 109 is a two-digit thumbwheel switch to denote year. An area switch bank 110 comprises three, two-digit thumbwheel switches manipulated for entering the prospect area designation.

The control panel 39 further includes a sources section 111. A source call switch bank 112 is a four-digit thumbwheel switch manipulated for entering which among the recorders 421—441 in Figure 1 will be a "shooter's box". As shown in Figure 4, a set (source call) pushbutton switch 113 when depressed causes the seismic source address (seismic source point) to be displayed and enters the "shooter's box" address into the control means 10. The "shooter's box" is displayed by a source called display 134. A roll switch bank 114 is a two-digit thumbwheel switch manipulated for entering the span for incrementing or decrementing the seismic source call for each successive seismic prospecting operation. A fwd/rev switch 138 is a two-position toggle switch which in "Forward" automatically increments the "shooter's box" address after each seismic source call and in "Reverse" automatically decrements the "shooter's box" address after each seismic source call. A file switch bank 115 is a four-digit thumbwheel switch manipulated for entering a file number. A set (file) pushbutton switch 116 when depressed causes the number set in the file switch bank 115 to be displayed and enters the file number into the control means 10. The file number is displayed by a file display 135. A source location switch bank 117 is a five-digit thumbwheel switch manipulated for entering an identification of the physical location of the seismic source point. A set (source location) pushbutton switch 118 when depressed causes the seismic source location to be displayed and enters the location of the seismic source into the control means 10. The seismic source location is displayed by a source location display 136. A roll switch bank 137 is a two-digit thumbwheel switch manipulated for entering the span for incrementing or decrementing the seismic source location identification. A fwd/rev switch 139 is a two-position toggle switch which in "Forward" automatically increments the identification of the seismic source location after each seismic source call and in "Reverse" automatically decrements the identification of the seismic source location after each seismic source call.

As shown in Figure 4, the control panel 39 also includes a seismic source identification section 120. An ID1/begin switch bank 121 is a four-digit thumbwheel switch manipulated for entering an identification that can be used as defined in a vibroseis seismic prospecting operation in order to indicate the beginning frequency for the vibrator sweep. An ID2/end switch bank 122 is a four-digital thumbwheel switch to denote an identification that can be used as defined in a vibroseis seismic prospecting operation in order to indicate the ending frequency for the vibrator sweep. An ID3/length switch bank 123 is a four-digit thumbwheel switch manipulated for entering an identification that can be used as defined in a vibroseis seismic prospecting operation in order to indicate the vibrator sweep length. An ID4/taper switch bank 124 is a four-digit thumbwheel switch to denote an identification that can be used as defined in a vibroseis seismic prospecting operation in order to indicate the vibrator sweep taper.

A sum mode, or SPARE, switch bank 119 is a three-digit thumbwheel switch manipulated for selecting the seismic-trace signal acquisition mode of the recorders 421—441 in Figure 1. The sum mode switch bank 119 in Figure 4 is manipulated for entering a SPARE code which determines whether the recorders 421—441 in Figure 1 will operate in the dynamite data processing mode or the stacking data processing mode, as well as the exponent used for weighting in the stacking data processing mode. The selected seismic-trace signal acquisition mode is displayed by a sum mode display 140.

The control panel 39 also includes a timing section 125. A time between sums switch bank 126 is a four-digit thumbwheel switch manipulated for entering the time (in tenths of seconds) between consecutive transmissions to the recorders 421—441 in Figure 1 in the stacking data processing mode. As shown in Figure 4, a set (time between sums) pushbutton switch 143 when depressed enters the time set in the time between sums switch bank 126 into the control means 10. However, if the time between transmissions in the stacking data processing mode is less than 4.5 seconds, the control means 10 will not transmit. A number of sums switch bank 127 is a four-digit thumbwheel switch manipulated for entering the number of initiations of the seismic source for a particular seismic source point in the stacking data processing mode. A current sum display 128 displays the number of the seismic source initiation currently being taken at a particular seismic source point. An SP mode switch 141 is a two-position toggle switch which in "Manual" requires an observer to initiate transmissions by the control means 10 to the recorders 421—441 in Figure 1 by depressing the start pushbutton switch 34 in Figure 4 and in "Automatic" automatically re-transmits the addresses and identifying and operating information a number of times equal to the number of initiations of the seismic source at a particular source point in the stacking data processing mode.

Finally, as shown in Figure 4 a time switch bank 129 is a four-digit thumbwheel switch manipulated for entering real time on a 24-hour basis. The time switch bank 129 must be reset after power down. A time set pushbutton switch 130 starts the real-time clock. A time display 142 displays real time.

The control panel 39 includes a bus structure which comprises an S-bus 49, T-bus 50, SW-bus 51, increment-bus 52, and display-bus 53 as shown in Figure 3. All information on the S-bus 49 is routed to a decimal-to-BCD converter 63 which converts information on the S-bus from a nine-line bus to a four-line bus (decimal to BCD). The information from the S-bus 49 then passes through a bus arbitration circuit 70, which is turned on by a signal from an arbitration logic circuit 71 on a line 204. The information from the S-bus 49 is routed by the bus arbitration circuit 70 to an arithmetic logic unit (ALU) 57 and then through another bus arbitration circuit 72 to an identifying and operating information format circuit 40 on a bus 205, with the exception of the information entered by means of the switches connected to the S-bus which bypasses the arithmetic logic unit on a bus 54 routed through the bus arbitration circuit 72 directly to the format circuit. All information on the T-bus 50 is routed to a decimal-to-BCD converter 64 which converts information on the T-bus from a nine-line bus to a four-line bus (decimal to BCD). The information from the T-bus 50 is the routed by an address circuit 76 to a memory 58. The thumbwheel switches of the control panel 39 enter information on the S-bus 49 and T-bus 50. Each of the thumbwheel switches is connected to the shift register 44 by a line 203. Units are scanned first, then tens. There is no hundreds or thousands switch on the S-bus 49, so hundreds and thousands are automatically forced to "0" if no buses are pulled low. Only one bus at a time can be pulled low because the thumbwheel switches can be in only one of 10 positions. Diodes prevent feedback currents from flowing from one thumbwheel switch to another. The set pushbutton switches of the control panel 39 are connected to the SW-bus 51. Each of the set pushbutton switches produces a "set" signal which is routed to the program counter 32 on a line 206. Any one of the set switches, except the sums set, sets an internal flip-flop included in the program counter 32, which produces a signal for entry of the addresses and identifying and operating information in connection with a test or seismic prospecting operation. All information on the increment-bus 52 is routed to a decimal-to-BCD converter 73 which converts information on the increment-bus from a nine-line bus to a four-line bus (decimal to BCD). The information from the increment-bus 52 then passes into a latch circuit 94 which is connected to a sweep counter 59, a sweep time counter 60, and a delay time counter 61. The increment-bus 52 is connected to the increment/decrement thumbwheel switches of the control panel 39. The shift register 44 is connected to each of the thumbwheel switches by the line 203. Units, tens, hundreds and thousands are scanned in ascending order. The display-bus 53 routes the information from the format circuit 40 to a display circuit 55. A 24-bit shift register 74 drives the display circuit 55 of the control panel 39 on a line 207 under the control of sweep control logic generated by the sweep control circuit 33. The display circuit 55 includes seven-segment display drivers, display lamps, and drivers for producing the signals used to drive the lamps. The 1-kHz line from a counter selects one of four data words by continuously counting and refreshing each display associated with the current sum every five milliseconds. The appropriate digits and the digit select lines are selected by a display update counter. Display select lines provide the selection of information and through a two-to-four line data selector select the appropriate display driver lines. These lines also drive one-of-four multiplexers to provide the data lines of the display circuit 55.

A flip-flop included in the program counter 32 produces part of the control logic for the shift register 44. The program counter 32 also includes two 4-bit counters which generate bit and word counts. A J—K flip-flop included in the program counter 32 controls the first and second transmissions, and the first 4-bit counter generates bit counts. Since a 16-bit word is produced at the conclusion of bit counts, an "end of word" signal is produced to enable the second 4-bit counter to apply the same process to the word count. The words are used to control the memory 58. The program counter 32 also includes a first-zero flip-flop and a second-zero flip-flop which produce signals when no recorders 421—441 in Figure 1 are being called, that is, when the number of stations (first series) switch bank 98 and the number of stations (second series) switch bank 101 in Figure 4 are both set to 0000. These signals inform all recorders 421—441 in Figure 1 that they are not being called. In this case, first begin and second begin 102 and first end and second end 103 in Figure 4 will read 0000 irrespective of the thumbwheel switch settings. The format circuit 40 in Figure 3 will transmit FFFF (hexidecimal for 16 one's).

The arithmetic logic unit 57, or address generator, extracts information from the memory 58 and the S-bus 49 and produces a sum signal by means of an adder. The information is routed by the bus arbitration circuit 72 to the format circuit 40. The information is routed from the format circuit 40 to the display circuit 55, as well as to a printer memory 65.

Information is entered in the memory 58 from the T-bus 50. Information is entered in the memory 58 from the T-bus 50 only when one of the set pushbutton switches of the control panel 39 is depressed. Otherwise, the information contained in the arithmetic logic unit 57 is entered in memory 58. To increment or decrement first begin, a roll flip-flop produces a "roll" signal which produces a "write enable" signal. Information from the memory 58 is routed to the arithmetic logic unit 57, is added to the span, and returns. The sum is always present at the input of the memory 58 but is entered only by the roll signal. A register holds the information from the memory 58 and precludes incrementing more than once. When information is entered into the memory 58, the contents of the register do not change. A Nicad battery provides power through a voltage regulator which supplies power to the memory 58 when the observer's vehicle battery power is removed so that certain information contained in the memory (first begin, second begin, shot point, etc.) is retained.

The format circuit 40 is connected to a shift register 45 which converts the information from the format circuit from BCD to bit-serial form. The shift register 45 is connected to a control format circuit 56. A gate 41 is turned on by a signal on a line 42 from the program counter 32. The gate 41 is also supplied with the 500-hertz signal on the line 13. The signal on the line 42 causes the gate 41 to produce an actuation signal on a line 43 to the control format circuit 56. The control format circuit 56 is employed, using frequency-shift keying at 2.5 and 3 kHz, to place on lines 46 and 47 the logical zeros and ones, respectively, of the addresses and identifying and operating information in bit-serial form from the shift register 45. The addresses, for example, comprise the numbers of the recorders 421—441 in Figure 1 which are to be activated during one particular cycle of operation of the control means 10.

Information from the time switch bank 129 in Figure 4 on the S-bus 49 in Figure 3 is routed from the decimal-to-BCD converter 63 by a bus 208 to a time of day circuit 66 to set the time. The time of day circuit 66 is connected to a real time counter 68. The real time counter 68 is connected to the program counter 32 by a line 209. Signals from the program counter 32 on the line 209 increment the real time counter 68 which updates the time information contained in the time of day circuit 66. The time information from the time of day circuit 66 is routed by the bus arbitration circuit 72 to the format circuit 40. The time is displayed by the display circuit 55. Preferably, seconds are not displayed.

The real time counter 68 has outputs which represent tens of milliseconds, hundreds of milliseconds, seconds, and tens of seconds. Divider circuits (divide by 10 and divide by six) divide by 60 for minutes. Other divider circuits divide by 24. After the count reaches 24, the real time counter 68 clears. Whenever the control means 10 is powered down, the time is reset.

The format circuit 40 converts all information to bit-serial or slice format. Information from the S-bus 49, arithmetic logic unit 57, memory 58, and time of day circuit 66 is all loaded into registers included in the format circuit 40. The information from the format circuit 40 is routed to the printer memory 65 and to the display circuit 55 and is also converted to bit-serial form by the shift register 45. Format control determines the word origin (S-bus 49, arithmetic logic unit 57, memory 58, or time of day circuit 66). These bits are applied to shift registers. When an end of word signal appears, which occurs every 16 bits, the entire contents are loaded into bit-serial converters. A subsequent word is brought into the registers, while they shift bit-serial information to the bit-serial converters.

As shown in Figure 3, the control means 10 further includes a cyclic redundancy check (CRC) generator 48 used in conjunction with the control format circuit 56 for producing a CRC code to check accuracy in transmission. The CRC generator 48 includes two counters and associated exclusive OR gates for producing a CRC code. Information from the control format circuit 56 is routed to the CRC generator 48 which produces a CRC code. The CRC code is inserted by the control format circuit 56 and transmitted with the addresses and identifying and operating information from the format circuit 40. A CRC code is transmitted only on certain words.

The control means 10 includes the latch circuit 94 which is set when a set pushbutton switch is depressed or a "start-up reset" signal appears. When the latch circuit 94 is set, the information from the time between sums switch bank 126 and number of sums switch bank 127 in Figure 4 which appears on the increment-bus 52 in Figure 3 is routed to a decimal-to-BCD converter 73 which converts information on the increment-bus from a nine-line bus to a four-line bus (decimal to BCD). The information from the increment-bus 52 is then set into latches. The information contained in the latch circuit 94 is routed to the sweep counter 59, sweep time counter 60, and delay time counter 61. A counter clocks a 1-kHz signal through the select lines of the control panel 39 also selecting the appropriate latch to latch the information for the sweep counter 59, sweep time counter 60, and delay time counter 61.

The sweep control circuit 33 generates the start-stop logic. The start pushbutton switch 34 is allowed to latch a start flip-flop included in the sweep control circuit 33 if a stop flip-flop included in the sweep control circuit has not been set and master reset is not in process.

The sweep control circuit 33 is activated by the start signal for controlling the sweep time counter 60. The signals from the sweep time counter 60 are routed to comparators and compared with information on data lines. When a compare is achieved or the start pushbutton switch 34 is depressed, a latch is set, and a master reset signal is not present, a start signal is issued to the start logic. The sweep time counter 60 is reset by a stop signal.

If the stop pushbutton switch 83 is depressed, a signal is clocked into a latch included in the sweep control circuit 33, which holds the information until the end of either a master reset or current sum operation. An AND gate is supplied with a 0.1-kHz signal to flash the stop lamp until the current operation is complete.

If the master reset pushbutton switch 82 is depressed, a signal is clocked into a latch included in the sweep control circuit 33. When a stop or correct sum compare signal appears, the latch issues a master reset signal.

The SP mode switch 141 in Figure 4 is ANDed with a compare reset line included in the sweep control circuit 33 in Figure 3 to determine if the SP mode switch is im the automatic or manual mode. The compare reset is clocked into a latch or hold the compare signal high until a start-up reset or master reset signal appears. The signals combine to control the automatic or manual operation.

The control means 10 additionally includes the sweep counter 59. The counting of the current sum counters included in the sweep counter 59 is controlled by the sweep time counter 60. The signals from the sweep counter 59 are routed by the arbitration logic circuit 71 to the sweep control circuit 33 for use in controlling the automatic mode.

The delay time counter 61 is also included in the control means 10. The delay time counter 61 allows the proper time to be counted out on the last sum of a sequence or on a master reset signal. The time delay is determined by the mode select line. The delay time counter 61 inhibits a counter included in the sweep control circuit 33 for the period of the time delay.

The sweep control circuit 33 initiates the dynamite mode when a "0" or a "1" is entered into the number of sums switch bank 127 and the time between sums switch bank 126 in Figure 4 is greater than or equal to 4.5 seconds, whereupon a single transmission sequence will occur. Along with the single transmission sequence, the file number entered into the file number switch bank 115 and rolled numbers will update, and if the printer select switch 91 is in "Normal", a printer 67 in Figure 3 will print.

The dynamite data processing mode is initiated by sensing certain lines of the latch circuit 94. If a logical one appears on any of these lines, a high will be present to allow multiple sum operations. If a logical zero appears on all these lines, all functions will be inhibited except the immediate production of a start signal. The shift register 74 is set to allow update of the display circuit 55.

The sweep control circuit 33 includes a minimum time lock-out circuit. The minimum time lock-out circuit reads switches set at 4.5 seconds and compares these switch settings to the information entered into the time between sums switch bank 126 in Figure 4 by using comparators. A signal of greater than or equal to from the comparators will provide a signal to allow production of a start signal.

The sweep counter circuit 33 in Figure 3 also includes a start-up reset circuit. During initial power up of the control means 10, a counter is clocked by a 1-kHz signal until the counter reaches 100, and then the counter resets and is maintained reset until power down. This allows a settling time of 0.1 second for input voltages to settle and brings up the control means 10 in a known state. The start-up reset signal resets the shift register 74 and inhibits the delay time counter 61, resets the master reset flip-flop, and resets the start flip-flop.

The arbitration logic circuit 71 includes a current sum reset latch which arbitrates the reset of the current sum and wave shapes the signal from the current sum compare. The arbitration logic circuit 71 also produces the printer arbitration signal which determines the printer function by latching on the last sum of the current sum counter or the master reset to provide a printout of the information from each of the switches of the control panel 39.

The control means 10 also preferably includes the printer 67. Information from the printer memory 65 is loaded into a printer interface circuit 69. Information from the printer interface circuit 69 is routed by a printer arbitration circuit 75 to the printer 67. The printer 67 is activated by a "printer start" signal from the program counter 32 on a line 210. J—K flip-flops included in the printer 67 produce a "print" signal which controls printing.

The printer 67 is preferably a drum-type printer with the characters 0—9 around the drum, which hit the drum during rotation of the drum. The print motor, started by a "print run" signal, rotates the drum. Once the motor is started and the drum rotates, signals are applied to reluctance pickups, which are magnetic pickups with two scores in front. Every time the drum rotates for example, a "drum" signal is produced; and every time a character passes by, a "character" signal is produced. Line starts are counted until the printer 67 reaches speed.

When sufficient line starts are counted, information sets a print flip-flop which produces a print signal. A "character print" signal represents the output of a new character from the printer memory 65. The printer memory 65 is addressed by various counters. The outputs of a control logic shift register included in the printer 67 are input into these counters. Addressing is controlled by the complement of the character print signal or by the line print signal. Information from the printer memory 65 is routed to digital comparators. The character print signal is routed to a counter that indicates which character is addressed. The drum signal produces a "line print" signal, and the counter is reset to a particular character. As the drum makes one rotation, all characters are counted as they pass by. Information stored in the printer memory 65 is compared with character counts. If a match exists, the character is printed.

There are 18 columns of output of which only nine are actually used. The columns are controlled so that any time the hammer is up, it is in front of the character that is to be printed. Line numbers are compared with characters. When the line number equals the character, the character is printed. The characters are chosen in the same order as they appear around the drum that is, first line is the first character, second line is the second character, etc. Eight characters are run through a digital comparator for each character count. The eight outputs are shifted to an 8-bit shift register. At the end of that period, the hammer drives accept the contents of the shift register. If there is a logical one in the shift register position, the hammer will strike; if there is a logical zero, the hammer will not strike. Typically, there will be a preponderance of zeros in the shift register. One side of the solenoid of the printer 67 is connected to +12 VDC, and the other to one of the columns. If one column is pulled low, the current in the solenoid will cause the hammer to strike. Otherwise, there will be +12 VDC on both sides of the solenoid, and the hammer will not strike. The output of one printer column is +, −, ×, ÷, =, diamond, *, √, and #. The symbols correspond to the symbols on the control panel 39 in Figure 4 for indicating what the printed information represents. The first printed line is first begin and first end, the second is second begin and second end, etc.

A power supply circuit (not shown) powers the control means 10. Since the control means 10 preferably uses CMOS devices exclusively, regulation is not provided on the logic power. The +5 VDC supply for the display lamps of the display circuit 55 is generated by switching a transistor on and off.

Each time the start pushbutton switch 34 is depressed, the control means 10 cycles through four phases (P0 through P3). These phases, or operations, which are controlled by the program counter 32, are summarized in Table 1.

TABLE 1

| Phase | Designation | Operation |
|-------|-------------|-----------|
| P0 | Halt | Maintains the recorders 421—441 in Figure 1 in an "idle" or "stop" state. |
| P1 | Bomb | Activates the radio transmitter 30 in Figure 3, generates a BOMB TONE, and increments the file and roll-along counters. |
| P2 | Call 1 | Transmits the addresses and identifying and operating information (first transmission). |
| P3 | Call 2 | Re-transmits the addresses and identifying and operating information (second transmission). |

The control means 10 steps through the halt mode (phase P0), the BOMB TONE (phase P1), the first transmission (phase P2), the second transmission (phase P3), and back to the halt mode (phase P0).

During phase P0, the control means 10 is in the "halt" or "idle" state. While in phase P0, the radio transmitter 30 is off; and the BOMB TONE is off. Either a test or start signal will step the control means 10 to phase P1. The test pushbutton switch 84 sets a test flip-flop which produces the test signal for a test operation; the start pushbutton switch 34 sets a start flip-flop to issue the start signal which initiates a seismic prospecting operation.

At the conclusion of phase P0, the step to phase P1 produces a scan signal, which scans the begin (first series) switch bank 96, first end, begin (second series) switch bank 99, and second end in Figure 4. The roll switch bank 104 is incremented during phase P1. Afterwards, a scan complete signal is produced.

During phase P1, the transmit flip-flop produces a transmit signal for activation of the radio transmitter 30 in Figure 3 so that the BOMB TONE is transmitted for 2.1 seconds. Afterwards, the control means 10 steps to phase P2.

During phase P2, a scan signal causes a scan through the control panel 39. The scan enters the addresses and identifying and operating information to be transmitted. A word count indicates the word entered during the scan. After scanning the control panel 39 during phase P2, another scan complete signal is produced. The first transmission of the addresses and identifying and operating information occurs for 864 milliseconds. At the end of the first transmission, the control means 10 steps to phase P3.

The control panel 39 is again scanned during phase P3, and a scan complete signal is produced. During phase P3, the second transmission of identifying and operating information occurs for another 864 milliseconds. At the end of the second transmission, the control means 10 reverts to phase P0. In the stacking data processing mode, the control means 10 reads the sum counter 127 in Figure 4 and executes phases P1 through P3 for each sum if the SP mode switch 141 is in "Automatic".

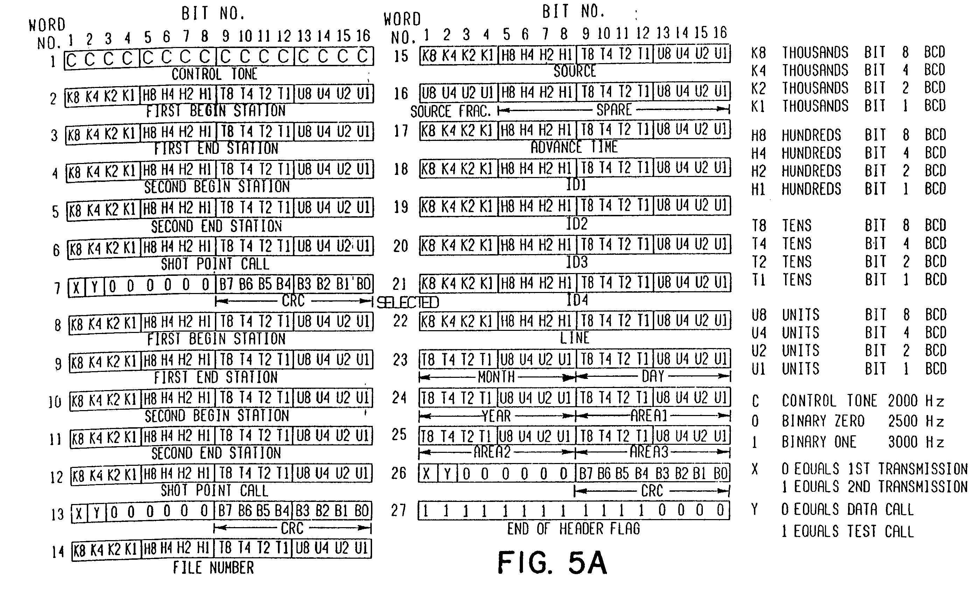

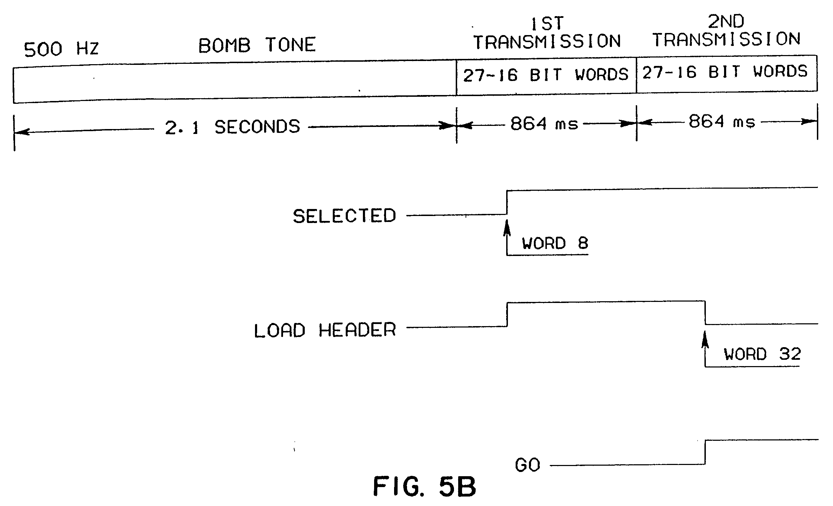

The transmission format for the addresses and identifying and operating information (27, 16-bit words) is shown in Figure 5A. In order to follow the operation of the control means 10 more easily, a time chart is provided in Figure 5B, which corresponds to the operation of the radio transmitter 30 in Figure 3.

Initially, as shown in Figure 5B the control means 10 transmits a carrier signal (BOMB TONE) at a frequency of 500 hertz for a period of time sufficient for the recorders 421—441 in Figure 1 to assume standby status, for example, 2.1 seconds. In order to do this, a 2.1-second 500-hertz signal is sent out from the program counter 32 through the line 36 which turns on the gate 26 in Figure 3. The 500-hertz signal on the line 13 passes through the gate 26 and is transmitted by the radio transmitter 30. The recorders 421—441 in Figure 1 then are ready for receiving the transmission of the addresses of those recorders selected to be activated, as well as identifying and operating information.

As shown in Figure 5A, the initial coded signal is a control tone at a frequency of 2 kHz for the purpose of signaling the recorders 421—441 in Figure 1 that a seismic prospecting operation is about to commence. In order to do this, a 32-millisecond coherent signal at 2 kHz is transmitted from the control means 10 by turning on the gate 27 from the program counter 32 through the line 35 in Figure 3 so that the 2-kHz signal from the line 18 modulates the radio transmitter 30. The 2-kHz control tone is independent of the output of the format circuit 40. Whenever a scan signal appears, a control tone (2 kHz) is produced as the first word, which inhibits generation of any other audio-signaling frequencies. When no control tone (2 kHz) is present, logical ones and zeros representative of the addresses and identifying and operating information are produced.

The control means 10 next transmits a sequence of coded radio signals in the form of 16-bit binary coded words as shown in Figure 5A by means of frequency-shift keying. The binary coded words, for example, are comprised of logical zeros in the form of 2.5-kHz tones and logical ones in the form of 3-kHz tones.

The control means 10 transmits four coded signals as shown in Figure 5A, which represent the addresses of the recorders 421—441 in Figure 1 which are selected to be activated. The recorders 421—441 which become activated are those with addresses from FIRST BEGIN STATION to FIRST END STATION and from SECOND BEGIN STATION to SECOND END STATION, inclusive, as shown in Figure 5A.

The control means 10 then transmits a coded signal with regard to the SHOT POINT CALL, which is determinative of the seismic source "shooter's box", that is, which among the recorders 421—441 in Figure 1 will initiate a seismic source, after which is transmitted a coded signal including a bit indicative of first transmission or second transmission, a bit indicative of an actual seismic prospecting operation or merely a test operation, six binary zero bits for completing a word, and an 8-bit CRC code produced by the CRC generator 48 in Figure 3. During phase P2, that is, during the first transmission, the X bit in Figure 5A is a logical zero. During phase P3, that is, during the second transmission, the X-bit is set to a logical one. The Y bit in Figure 5A is a logical zero for a test operation and is set to a logical one for an actual seismic prospecting operation. The above sequence requires approximately 231 milliseconds.

The identical sequence is then repeated during the following 231 milliseconds. The purpose of repeating the sequence is to provide redundancy in order to enhance the reliability of operation of the selected recorders.

After the addresses and other coded signals through the CRC code are repeated, the control means 10 transmits the record-header block identification data and recording-parameter data with regard to the seismic prospecting operation. The record-header block identification data as shown in Figure 5A includes a coded signal which represents the FILE NUMBER after which is transmitted a SOURCE location identification followed by a SOURCE FRACTION if the SOURCE location is actually offset from a reference survey marker.

The control means 10 next transmits recording-parameter data comprising a SPARE, the SPARE being determinative of the mode of operation, as well as the selected weighting factor to be used if the seismic-trace data is to be vertically stacked. The control means 10 can then transmit a coded signal determinative of the ADVANCE TIME, which is the time delay between the actual initiation of the seismic source and the time that the activated recorders begin acquisition of the resultant seismic-trace data, although in the preferred embodiment the ADVANCE TIME is entered into the recorders 421—441 in Figure 1 at the time of their deployment as more fully described in the aforementioned Read et al. application. In the event that an ADVANCE TIME is transmitted to or, preferably, entered into the recorders 421—441, the seismic source is initiated prior to beginning the recording process.

Thereafter, as shown in Figure 5A the control means 10 transmits additional record-header block identification data including: ID1 through ID4 whereby any desired information is transmitted by the control means to the activated recorders to be recorded on the magnetic tape cartridge; a profile survey LINE identification; MONTH, DAY, and YEAR identification; and AREA1 through AREA3 indicative of the prospect area. The control means 10 then transmits the coded signal including a bit indicative of first transmission or second transmission, a bit indicative of an actual seismic prospecting operation or merely a test operation, siz zero bits for completing a word, and an eight-bit CRC code. Finally, the control means 10 transmits a coded signal which represents END OF HEADER FLAG. The record-header block identification data and recording-parameter data transmission requires 402 milliseconds.

In order to transmit the addresses and identifying and operating information shown in Figure 5A, a signal appears on the line 42 from the program counter 32 to turn on the gate 41, which is continuously supplied with 500-hertz signal through the line 13 in Figure 3. The gate 41 accordingly sends out an actuation signal on the line 43 to the control format circuit 56 which actuates from binary code to produce frequency-shift keying (coherent system). The control format circuit 56 produces signals on the lines 46 and 47 which turn on the gates 28 and 29, respectively, so that the 2.5-kHz and 3-kHz signals from the respective lines 20 and 22 modulate the radio transmitter 30.

The entire sequence described above is then repeated during the following 864 milliseconds as shown in Figure 5B. The only difference in the transmitted coded signals is that the transmission bit changes to reflect second transmission rather than first transmission. The END OF HEADER FLAG contained in the second transmission comprises the zero-time mark. The conclusion of the second transmission represented by the END OF HEADER FLAG is known as "time zero" and is actually time for commencement of recording, that is, the instant at which the seismic wave to be investigated is initiated and sent into the earth. After the END OF HEADER FLAG contained in the second transmission is transmitted, the carrier off signal, acting through the line 36 in Figure 3, deactivates the radio transmitter 30. This is the instant known as "end of transmission (EOT)".

Additional record-header block identification data and recording-parameter data are entered into the recorders 421—441 in Figure 1 at the time that they are deployed. The STATION location identification, for example, is included in record-header block identification data entered into each of the recorders 421—441 at the time of deployment. The ADVANCE TIME mentioned above, an adjustable RECORD LENGTH, which is determinative of the actual period of recording, and other operating information, are also entered into the recorders 421—441 at the time of deployment. In the mode of operation involving a high energy impulsive seismic source, the record-header block identification data and recording-parameter data are recorded on the magnetic tape cartridge after the second transmission is completed, and in the mode of operation involving a low energy surface seismic source, the record-header block identification data and recording-parameter data are recorded on the magnetic tape cartridge at the time that seismic-trace data is recorded.

The test pushbutton switch 84 activates a test flip-flop included in the program counter 32, which produces a test signal. The test signal inhibits a start flip-flop included in the program counter 32, which produces a start signal. The start signal in turn activates the transmit flip-flop included in the program counter 32, which produces a transmit signal, thereby causing the radio transmitter 30 to transmit a BOMB TONE but does not initiate data acquisition.

The control means 10 transmits coded signals for the selective activation of certain recorders 421—441 in Figure 1 deployed in the prospect area, that is, the addresses of the various recorders that are to be activated for producing a particular seismic-trace record; identifying and operating information concerning the next record to be produced needed by each of the activated recorders; and a zero-time mark for synchronizing all activated recorders, so that sampling of the seismic-trace signal to be recorded is synchronized. Such information is needed for obtaining useful seismic-trace data.

The control means 10 automatically initiates and controls the operational modes of the recorders 421—441 in Figure 1. In the dynamite data processing mode, the recorders 421—441 can be used to initiate a high energy impulsive seismic source. The recorders 421—441 normalize and record the seismic-trace data generated by high energy impulsive seismic sources on a magnetic tape cartridge. In the stacking data processing mode, the recorders 421—441 can be used to initiate one or more low energy surface seismic sources and to record their pilot signals. Seismic-trace data generated by low energy surface seismic sources weighted and vertically stacked (summed) before being recorded on the magnetic tape cartridge. The weighting modes available in the recorders 421—441 include: IPW(0), unweighted, floating-point sum; IPW(1), inverse average absolute value weighting; IPW(2), inverse average square value weighting; and IPW(4), inverse average fourth-power weighting. Weighted and vertically stacked seismic-trace data is normalized and recorded on the magnetic tape cartridge either at the end of the last initiation in the current sequence or at the beginning of the first initiation in the subsequent sequence. A typical seismic-trace record, or data-acquisition time, for example, is of the order of six seconds for dynamite and 20 seconds for a vibrator sweep during vibroseis seismic prospecting. Sweep parameters can be entered as source identification information which is recorded on each magnetic tape cartridge.

A three-digit word, known as the SPARE, from the sum mode switch bank 119 in Figure 4 determines the operational mode of the recorders 421—441 in Figure 1. The arbitration logic circuit 71, sweep control circuit 33, sweep counter 59, sweep time counter 60, and delay time counter 61 in Figure 3 control the manual and automatic operation of the control means 10. In the stacking data processing mode, the sweep control circuit 33 automatically changes the SPARE for designating the type of recording ("immediate" or "delayed") to be produced. The counter circuits 59, 60, and 61 cause the addresses and identifying and operating information to be transmitted automatically in accordance with the information from the time between sums switch bank 126 and number of sums switch bank 127 in Figure 4 entered by the operator. In the manual SP mode, the control means 10 transmits the addresses and identifying and operating information for initiations in the present seismic source point sequence and then stops until the start pushbutton switch 34 is depressed again. In the automatic SP mode, the control means 10 automatically transmits such addresses and identifying and operating information without stopping. The control means 10 eliminates potential operator error and increases the rate at which the cableless seismic digital recording system can be used to acquire vibroseis seismic-trace data. Depressing the stop pushbutton switch halts transmissions only after the recorders 421—441 in Figure 1 have completed the current data acquisition process. Depressing the master reset pushbutton switch 82 in Figure 4 will cause the control means 10 to issue a special command which de-activates the recorders 421—441 in Figure 1. The arbitration logic circuit 71 in Figure 3 combines and coordinates these operations.

After each seismic prospecting operation, that is, after an initiation of a high energy impulsive seismic source or sequence of initiations of a low energy surface seismic source, the control means 10 automatically updates various information. The information entered by means of the begin (first series) switch bank 96 in Figure 4 and the first end information are incremented or decremented dependent upon the position of the fwd/rev switch 105 by the number entered by means of the roll (first series) switch bank 104 for changing the first array. Similarly, the information entered by means of the begin (second series) switch bank 99 and the second end information are incremented or decremented dependent upon the position of the fwd/rev switch 133 by the number entered by means of the roll (second series) switch bank 132 for changing the second array. Also, the information entered by means of the source call switch bank 112 is incremented or decremented dependent upon the position of the fwd/rev switch 138 by the number entered by means of the roll switch bank 114 for changing the "shooter's box". Furthermore, the information entered by means of the source location switch bank 117 is incremented or decremented dependent upon the position of the fwd/rev switch 139 by the number entered by means of the roll switch bank 137 for changing the identification of the seismic source location and source fraction. Additionally, the information entered by means of the file switch bank 115 is incremented. The modified information is automatically included in the subsequent transmission for a high energy impulsive seismic source initiation or sequence of low energy surface seismic source initiations.

It is understood that the invention is not limited to the exemplified embodiments set forth herein but is to be limited only by the scope of the appended claims.

## Claims

1. An apparatus for controlling cableless seismic digital recorders, each being connectable to at least one associated seismic wave detector for use in seismic prospecting, and operative for weighting and vertically stacking seismic-trace data from the at least one seismic wave detector, comprising:

means for entering information for selecting which of said recorders is to be activated during a seismic prospecting operation;

means for entering operating information for selecting from a plurality of operational modes of each recorder;

means for encoding said information as coded signals for transmission to said recorders; and

means for transmitting said coded signals to said recorders

characterised in that said means for entering operating information comprises means for selecting an operational mode for weighting and vertically stacking seismic-trace data in the recorder.

2. The apparatus of Claim 1, further characterised by means for selectably automatically repeating the transmitting of coded signals from one seismic prospecting operation during a subsequent seismic prospecting operation.

3. The apparatus of Claim 2, further characterised by means for automatically modifying said information encoded as coded signals prior to said means for selectably automatically repeating the transmitting of coded signals transmitting coded signals during said subsequent seismic prospecting operation.

4. The apparatus of Claim 1, characterised in that the means for entering operating information includes in the operating information, information for alternatively selecting a first operational mode for weighting and vertically stacking seismic trace data or a second operational mode for processing seismic trace data without weighting and vertically stacking.

5. A method for controlling cableless seismic digital recorders, each being connectable to at least one associated seismic wave detector for use in seismic prospecting, and operative for weighting and vertically stacking seismic-trace data from the at least one seismic wave detector, comprising the steps of:

entering information for selecting which of the recorders is to be activated during a seismic prospecting operation and operating information,

characterised by including in the operating information, information for weighting and vertically stacking seismic trace data;

encoding the information and operating information as coded signals for transmission to the recorder; and

transmitting the coded signals to the recorders.

6. The method of Claim 5, further characterised by the steps of automatically modifying the information encoded as coded signals and automatically repeating the transmitting of coded signals during a subsequent seismic prospecting operation.

7. The method of Claim 5, characterised in that the operating information includes information for the weighting value applied during weighting and vertically stacking seismic-trace data.

8. The method of Claim 5, characterised in that the operating information includes information for alternatively selecting a first operational mode for weighting and vertically stacking seismic trace data or a second operational mode for processing seismic trace data without weighting and vertically stacking.

## Patentansprüche

1. Vorrichtung zum Steuern kabelloser, seismischer, digitaler Aufzeichnungsgeräte, von denen jedes mit wenigstens einem zugehörigen seismischen Wellendetektor zur Verwendung beim seismischen Prospektieren verbindbar ist und so arbeiten kann, daß es seismische Aufzeichnungsdaten von dem wenigstens einen seismischen Wellendetektor wichtet und vertikal stapelt, mit Einrichtungen zum Eingeben einer Information, um zu wählen, welches der Aufzeichnungsgeräte während eines seismischen Prospektierungsbetriebes zu aktivieren ist, Einrichtungen zum Eingeben einer Betriebsinformation, um eine Auswahl aus einer Vielzahl von Betriebsarten jedes Aufzeichnungsgerätes zu treffen, Einrichtungen zum Codieren der Information in Form von codierten Signalen zur Übertragung auf die Aufzeichnungsgeräte und Einrichtungen zum Übertragen der codierten Signale auf die Aufzeichnungsgeräte, dadurch gekennzeichnet, daß die Einrichtungen zum Eingeben der Betriebsinformation Einrichtungen zum Wählen der Betriebsart, zum Wichten und vertikalen Stapeln der seismischen Aufzeichnungsdaten im Aufzeichnungsgerät umfassen.

2. Vorrichtung nach Anspruch 1, gekennzeichnet durch Einrichtungen zum wählbaren und automatischen Wiederholen der Übertragung der codierten Signale von einem seismischen Prospektierungsvorgang während eines folgenden seismischen Prospektierungsvorgangs.

3. Vorrichtung nach Anspruch 2, gekennzeichnet durch Einrichtungen zum automatischen Modifizieren der Information, die in Form codierter Signale codiert ist, und zwar bevor die Einrichtungen zum wählbaren und automatischen Wiederholen der Übertragung der codierten Signale die codierten Signale während des folgenden seismischen Prospektierungsvorgangs übertragen.

4. Vorrichtung nach Anspruch 1, dadurch gekennzeichnet, daß die Einrichtungen zum Eingeben der Betriebsinformation in die Betriebsinformation eine Information einschließen, alternativ eine erste Betriebsart zum Wichten und vertikalen Stapeln der seismischen Aufzeichnungsdaten oder eine zweite Betriebsart zum Verarbeiten seismischer Aufzeichnungsdaten ohne Wichtung und vertikale Stapelung zu wählen.

5. Verfahren zum Steuern von kabellosen, seismischen, digitalen Aufzeichnungsgeräten, von denen jedes mit wenigstens einem zugehörigen seismischen Wellendetektor zur Verwendung beim seismischen Prospektieren verbindbar ist und so arbeiten kann, daß es seismische Aufzeichnungsdaten von dem wenigstens einen seismischen Wellendetektor wichtet und vertikal stapelt, welches die Schritte umfaßt: Eingeben einer Information zum Wählen, welches der Aufzeichnungsgeräte während eines seismischen Prospektierungsvorgangs zu aktivieren ist und zum Eingeben einer Betriebsinformation, dadurch gekennzeichnet, daß in die Betriebsinformation eine Information eingeschlossen wird, die seismischen Aufzeichnungsdaten zu wichten und vertikal zu stapeln, daß die Information und die Betriebsinformation als codierte Signale zur Übertragung auf die Aufzeichnungsgeräte codiert werden, und daß die codierten Signale auf die Aufzeichnungsgeräte übertragen werden.

6. Verfahren nach Anspruch 5, gekennzeichnet durch die Schritte der automatischen Modifizierung der in Form von codierten Signalen codierten Information und der automatischen Wiederholung der Übertragung der codierten Signale während eines folgenden seismischen Prospektierungsvorgangs.

7. Verfahren nach Anspruch 5, dadurch gekennzeichnet, daß die Betriebsinformation eine Information über den Wichtungswert enthält, der beim Wichten und vertikalen Stapeln der seismischen Aufzeichnungsdaten benutzt wird.

8. Verfahren nach Anspruch 5, dadurch gekennzeichnet, daß die Betriebsinformation eine Information enthält, alternativ eine erste Betriebsart zum Wichten und vertikalen Stapeln der seismischen Aufzeichnungdaten oder eine zweite Betriebsart zum Verarbeiten der seismischen Aufzeichnungsdaten ohne Wichtung und vertikale Stapelung zu wählen.

**Revendications**

1. Un appareil pour commander des enregistreurs numériques sismiques sans câble, chaque enregistreur pouvant être connecté à au moins un détecteur d'ondes sismiques associé, pour l'utilisation en prospection sismique, et étant capable de pondérer et de superposer verticalement des données de traces sismiques provenant d'au moins un détecteur d'ondes sismiques, comprenant:

des moyens pour introduire une information permettant de sélectionner ceux des enregistreurs qui doivent être activés pendant une opération de prospection sismique;

des moyens pour introduire une information de fonctionnement, pour effectuer une sélection parmi un ensemble de modes de fonctionnement de chaque enregistreur;

des moyens pour coder cette information sous la forme de signaux codés à émettre vers les enregistreurs; et

des moyens pour émettre les signaux codés vers le enregistreurs;

caractérisé en ce que les moyens prévus pour introduire une information de fonctionnement comprennent des moyens pour sélectionner un mode de fonctionnement pour la pondération et la superposition verticale de données de traces sismiques dans l'enregistreur.

2. L'appareil de la revendication 1, caractérisé en outre par

des moyens pour répéter automatiquement, et avec possibilité de sélection, l'émission de signaux codés provenant d'une opération de prospection sismique, au cours d'une opération de prospection sismique ultérieure.

3. L'appareil de la revendication 2, caractérisé en outre par

des moyens pour modifier automatiquement l'information qui est codée sous la forme de signaux codés, avant que les moyens prévus pour répéter automatiquement l'émission de signaux codés, avec possibilité de sélection, n'émettent des signaux codés pendant l'opération de prospection sismique ultérieure.

4. L'appareil de la revendication 1, caractérisé en ce que les moyens prévus pour introduire une information de fonctionnement font intervenir, dans l'information de fonctionnement, une information permettant de sélectionner soit un premier mode de fonctionnement pour la pondération et la superposition verticale de données de traces sismiques, soit un second mode de fonctionnement pour le traitement de données de traces sismiques sans pondération ni superposition verticale.

5. Un procédé pour commander des enregistreurs numériques sismiques sans câble, chaque enregistreur pouvant être connecté à au moins un détecteur d'ondes sismiques associé, pour l'utilisation en prospection sismique, et étant capable de pondérer et de superposer verticalement des données de traces sismiques provenant d'au moins un détecteur d'ondes sismiques, comprenant l'opération suivante:

on introduit une information pour sélectionner ceux des enregistreurs qui doivent être activés pendant une opération de prospection sismique, et une information de fonctionnnement,

caractérisé en ce qu'on incorpore dans l'information de fonctionnement une information concernant la pondération et la superposition verticale de données de traces sismiques;

on code l'information de sélection et l'information de fonctionnement sous la forme de signaux codés à émettre vers les enregistreurs; et

on émet les signaux codés vers les enregistreurs.

6. Le procédé se la revendication 5, caractérisé en outre par les opérations qui consistent à modifier automatiquement l'information codée sous la forme de signaux codés, et à répéter automatiquement l'émission de signaux codés pendant une opération de prospection sismique ultérieure.

7. Le procédé de la revendication 5, caractérisé en ce que l'information de fonctionnement comprend une information concernant la valeur de pondération qui est appliquée pendant la pondération et la superposition verticale de données de traces sismiques.

8. Le procédé de la revendication 5, caractérisé en ce que l'information de fonctionnement comprend une information permettant de sélectionner soit un premier mode de fonctionnement pour la pondération et la superposition verticale de données de traces sismiques, soit un second mode de fonctionnement pour le traitement de données de traces sismiques sans pondération ni superposition verticale.

FIG. 1

EP 0 113 220 B1

FIG. 2

FIG. 3

FIG. 4

BIT NO.

| WORD NO. | 1 | 2 | 3 | 4 | 5 | 6 | 7 | 8 | 9 | 10 | 11 | 12 | 13 | 14 | 15 | 16 | |
|---|---|---|---|---|---|---|---|---|---|---|---|---|---|---|---|---|---|
| 1 | C | C | C | C | C | C | C | C | C | C | C | C | C | C | C | C | CONTROL TONE |
| 2 | K8 | K4 | K2 | K1 | H8 | H4 | H2 | H1 | T8 | T4 | T2 | T1 | U8 | U4 | U2 | U1 | FIRST BEGIN STATION |
| 3 | K8 | K4 | K2 | K1 | H8 | H4 | H2 | H1 | T8 | T4 | T2 | T1 | U8 | U4 | U2 | U1 | FIRST END STATION |
| 4 | K8 | K4 | K2 | K1 | H8 | H4 | H2 | H1 | T8 | T4 | T2 | T1 | U8 | U4 | U2 | U1 | SECOND BEGIN STATION |
| 5 | K8 | K4 | K2 | K1 | H8 | H4 | H2 | H1 | T8 | T4 | T2 | T1 | U8 | U4 | U2 | U1 | SECOND END STATION |
| 6 | K8 | K4 | K2 | K1 | H8 | H4 | H2 | H1 | T8 | T4 | T2 | T1 | U8 | U4 | U2 | U1 | SHOT POINT CALL |
| 7 | X | Y | 0 | 0 | 0 | 0 | 0 | 0 | B7 | B6 | B5 | B4 | B3 | B2 | B1 | B0 | CRC |
| 8 | K8 | K4 | K2 | K1 | H8 | H4 | H2 | H1 | T8 | T4 | T2 | T1 | U8 | U4 | U2 | U1 | FIRST BEGIN STATION |
| 9 | K8 | K4 | K2 | K1 | H8 | H4 | H2 | H1 | T8 | T4 | T2 | T1 | U8 | U4 | U2 | U1 | FIRST END STATION |
| 10 | K8 | K4 | K2 | K1 | H8 | H4 | H2 | H1 | T8 | T4 | T2 | T1 | U8 | U4 | U2 | U1 | SECOND BEGIN STATION |
| 11 | K8 | K4 | K2 | K1 | H8 | H4 | H2 | H1 | T8 | T4 | T2 | T1 | U8 | U4 | U2 | U1 | SECOND END STATION |
| 12 | K8 | K4 | K2 | K1 | H8 | H4 | H2 | H1 | T8 | T4 | T2 | T1 | U8 | U4 | U2 | U1 | SHOT POINT CALL |
| 13 | X | Y | 0 | 0 | 0 | 0 | 0 | 0 | B7 | B6 | B5 | B4 | B3 | B2 | B1 | B0 | CRC |
| 14 | K8 | K4 | K2 | K1 | H8 | H4 | H2 | H1 | T8 | T4 | T2 | T1 | U8 | U4 | U2 | U1 | FILE NUMBER |

BIT NO.

| WORD NO. | 1 | 2 | 3 | 4 | 5 | 6 | 7 | 8 | 9 | 10 | 11 | 12 | 13 | 14 | 15 | 16 | |
|---|---|---|---|---|---|---|---|---|---|---|---|---|---|---|---|---|---|
| 15 | K8 | K4 | K2 | K1 | H8 | H4 | H2 | H1 | T8 | T4 | T2 | T1 | U8 | U4 | U2 | U1 | SOURCE |
| 16 | U8 | U4 | U2 | U1 | H8 | H4 | H2 | H1 | T8 | T4 | T2 | T1 | U8 | U4 | U2 | U1 | SOURCE FRAC. / SPARE |
| 17 | K8 | K4 | K2 | K1 | H8 | H4 | H2 | H1 | T8 | T4 | T2 | T1 | U8 | U4 | U2 | U1 | ADVANCE TIME |
| 18 | K8 | K4 | K2 | K1 | H8 | H4 | H2 | H1 | T8 | T4 | T2 | T1 | U8 | U4 | U2 | U1 | ID1 |
| 19 | K8 | K4 | K2 | K1 | H8 | H4 | H2 | H1 | T8 | T4 | T2 | T1 | U8 | U4 | U2 | U1 | ID2 |
| 20 | K8 | K4 | K2 | K1 | H8 | H4 | H2 | H1 | T8 | T4 | T2 | T1 | U8 | U4 | U2 | U1 | ID3 |
| 21 | K8 | K4 | K2 | K1 | H8 | H4 | H2 | H1 | T8 | T4 | T2 | T1 | U8 | U4 | U2 | U1 | ID4 SELECTED |
| 22 | K8 | K4 | K2 | K1 | H8 | H4 | H2 | H1 | T8 | T4 | T2 | T1 | U8 | U4 | U2 | U1 | LINE |
| 23 | T8 | T4 | T2 | T1 | U8 | U4 | U2 | U1 | T8 | T4 | T2 | T1 | U8 | U4 | U2 | U1 | MONTH / DAY |
| 24 | T8 | T4 | T2 | T1 | U8 | U4 | U2 | U1 | T8 | T4 | T2 | T1 | U8 | U4 | U2 | U1 | YEAR / AREA1 |
| 25 | T8 | T4 | T2 | T1 | U8 | U4 | U2 | U1 | T8 | T4 | T2 | T1 | U8 | U4 | U2 | U1 | AREA2 / AREA3 |
| 26 | X | Y | 0 | 0 | 0 | 0 | 0 | 0 | B7 | B6 | B5 | B4 | B3 | B2 | B1 | B0 | CRC |
| 27 | 1 | 1 | 1 | 1 | 1 | 1 | 1 | 1 | 1 | 1 | 1 | 1 | 0 | 0 | 0 | 0 | END OF HEADER FLAG |

| | | | | |
|---|---|---|---|---|
| K8 | THOUSANDS | BIT | 8 | BCD |
| K4 | THOUSANDS | BIT | 4 | BCD |
| K2 | THOUSANDS | BIT | 2 | BCD |
| K1 | THOUSANDS | BIT | 1 | BCD |
| H8 | HUNDREDS | BIT | 8 | BCD |
| H4 | HUNDREDS | BIT | 4 | BCD |
| H2 | HUNDREDS | BIT | 2 | BCD |
| H1 | HUNDREDS | BIT | 1 | BCD |
| T8 | TENS | BIT | 8 | BCD |
| T4 | TENS | BIT | 4 | BCD |
| T2 | TENS | BIT | 2 | BCD |
| T1 | TENS | BIT | 1 | BCD |
| U8 | UNITS | BIT | 8 | BCD |
| U4 | UNITS | BIT | 4 | BCD |
| U2 | UNITS | BIT | 2 | BCD |
| U1 | UNITS | BIT | 1 | BCD |
| C | CONTROL TONE | | 2000 Hz | |
| 0 | BINARY ZERO | | 2500 Hz | |
| 1 | BINARY ONE | | 3000 Hz | |
| X | 0 EQUALS 1ST TRANSMISSION | | | |
| | 1 EQUALS 2ND TRANSMISSION | | | |
| Y | 0 EQUALS DATA CALL | | | |
| | 1 EQUALS TEST CALL | | | |

## FIG. 5A

EP 0 113 220 B1

FIG. 5B